# EUROPÄISCHE PATENTSCHRIFT

(11) **EP 3 245 021 B1**
(45) Veröffentlichungstag und Bekanntmachung des Hinweises auf die Patenterteilung: **02.01.2019**
(21) Anmeldenummer: 15794588.2
(22) Anmeldetag: 16.11.2015
(51) Int. Cl.: B23K 11/00, B23K 11/11, B23K 11/16, B23K 11/24, B23K 11/30, B23K 35/02

(54) **SCHWEISSELEKTRODE, VERFAHREN UND VORRICHTUNG ZUM SCHWEISSEN VON SANDWICHBLECHEN**
WELDING ELECTRODE, METHOD, AND DEVICE FOR WELDING SANDWICH PANELS
ÉLECTRODE DE SOUDAGE, PROCÉDÉ ET DISPOSITIF DE SOUDAGE DE TÔLES SANDWICH

(30) Priorität: 14.01.2015 DE 102015100496
(43) Veröffentlichungstag der Anmeldung: 22.11.2017
(73) Patentinhaber: ThyssenKrupp Steel Europe AG, 47166 Duisburg (DE); thyssenkrupp AG, 45143 Essen (DE)
(72) Erfinder: CHERGUI, Azeddine, 44139 Dortmund (DE); BERAK, Jovan, 40239 Düsseldorf (DE)
(74) Vertreter: thyssenkrupp Intellectual Property GmbH
(86) Internationale Anmeldenummer: PCT/EP2015/076656
(87) Internationale Veröffentlichungsnummer: WO 2016/113019

(56) Entgegenhaltungen:
- EP-A1- 0 383 060
- DE-A1- 4 038 016
- DE-A1-102012 106 521
- FR-A- 1 535 578
- US-A1- 2014 286 699

## Beschreibung

Die Erfindung betrifft eine Schweißelektrode umfassend einen Schweißelektrodenkörper und eine mit dem Schweißelektrodenkörper verbundene oder verbindbare Schweißelektrodenkappe, gemäss dem Oberbegriff des Anspruchs 1, wie z.B. aus der EP 0 383 060 A1 bekannt, zur Kontaktierung der Schweißelektrode mit einem Bauteil zur Herstellung einer Schweißverbindung.

Darüber hinaus betrifft die Erfindung ein Verfahren zum Widerstandsschweißen eines Sandwichblechs mit mindestens einem weiteren metallischen Bauteil, wobei das Sandwichblech zwei metallische Deckschichten und eine zwischen den metallischen Deckschichten angeordnete thermoplastische Kunststoffschicht aufweist, bei welchem der zu schweißende Bereich des Sandwichblechs derart erwärmt wird, dass die thermoplastische Kunststoffschicht aufweicht und durch Zusammendrücken der Deckschichten aus dem Schweißbereich verdrängt wird und die Deckschichten mit dem weiteren Bauteil durch einen elektrischen Stromfluss in einem ersten Stromkreis über eine erste, auf der Seite des Sandwichblechs angeordnete Schweißelektrode und eine zweite, auf der Seite des weiteren metallischen Bauteils angeordnete Schweißelektrode miteinander verschweißt werden.

Weiterhin betrifft die Erfindung eine Vorrichtung zum Widerstandsschweißen eines Sandwichblechs, welches eine zwischen metallischen Deckschichten angeordnete thermoplastische Kunststoffschicht aufweist, mit mindestens einem weiteren metallischen Bauteil, mit einer ersten, auf der Seite des Sandwichblechs anordenbaren Schweißelektrode und mit einer zweiten, auf der Seite des weiteren metallischen Bauteils anordenbaren Schweißelektrode, mit Mitteln zur Bereitstellung eines ersten Stromkreises, welche einen Schweißstrom zumindest über die erste und die zweite Schweißelektrode führen, und mit Mitteln zur Verdrängung der Kunststoffschicht des Sandwichblechs aus dem zu schweißenden Bereich des Sandwichblechs.

Schließlich betrifft die Erfindung auch die Verwendung einer Schweißelektrode oder einer Vorrichtung zum Widerstandsschweißen.

Durch die Verwendung von Sandwichblechen, welche zwischen zwei metallischen dünnen Deckschichten eine thermoplastische Kunststoffschicht aufweisen, kann der steigenden Nachfrage nach Leichtbaukonzepten im Kraftfahrzeugbereich nachgekommen werden, um unter Verwendung dieser Bleche die Gewichtseinsparungspotentiale im Kraftfahrzeugbau weiter zu vergrößern. Sandwichbleche können verschiedene vorteilhafte, sich häufig ausschließende Eigenschaften bereitstellen, welche neue Gewichtseinsparpotentiale eröffnen. So weisen Sandwichbleche aufgrund der Kunststoffschicht ein deutlich geringeres Gewicht als Vollbleche auf und stellen gleichzeitig hohe Festigkeitswerte zur Verfügung. Darüber hinaus sind die Sandwichbleche schalldämpfend und bieten eine hohe Steifigkeit.

Problematisch bei der Verarbeitung von Sandwichblechen ist allerdings, dass diese eine elektrisch isolierende Kunststoffschicht aufweisen, welche bei Schweißverfahren Probleme in Bezug auf die Ausbildung einer einwandfreien Schweißverbindung verursacht. Aufgrund der mangelnden Eignung der Sandwichbleche für das Verschweißen, beispielsweise für ein Widerstandsschweißen oder Widerstandspunktschweißen mit anderen metallischen Bauteilen, werden Sandwichbleche daher häufig verklebt oder mechanisch miteinander gefügt.

Um trotzdem ein Verschweißen von Sandwichblechen zu ermöglichen, ist aus der deutschen Offenlegungsschrift DE 10 2011 109 708 A1 ein Verfahren zum Fügen eines Sandwichblechs mit einem weiteren metallischen Bauteil bekannt, bei welchem die Zwischenschicht im Verbindungsbereich aufgeschmolzen wird und aus dem Verbindungsbereich verdrängt wird, so dass anschließend durch Herstellen eines elektrischen Kontakts zwischen dem Bauelement und den Deckschichten des Sandwichblechs eine Schweißverbindung erzeugt werden kann. Es wird vorgeschlagen, die Erwärmung der Fügebereiche durch temperierbare Elektroden oder Presselemente durchzuführen. Die Schweißelektroden oder Presselemente sind hierzu beispielsweise mit Heizelementen versehen, welche durch eine Regelung separat angesteuert werden. Der Aufbau der Schweißelektroden wird damit relativ komplex, da Modifikationen am Schweißelektrodenkörper und der Schweißelektrodenkappe notwendig sind. Darüber hinaus ist es wünschenswert, die Geschwindigkeit des Erwärmens der thermoplastischen Kunststoffschicht weiter zu steigern, so dass möglichst kurze Zykluszeiten erreicht werden können.

Aus der US-Patentschrift US 4,650,951 ist darüber hinaus ein Verfahren zum Widerstandsschweißen zweier Verbundbleche bekannt, welches zwei Schweißelektroden verwendet, die durch um die Schweißelektroden herum angeordnete Heizelemente beheizt sind und so die zwischen den Deckschichten liegende Kunststoffschicht erwärmen und verdrängen, bevor das eigentliche Verschweißen beginnt. Dies führt zu vergleichsweise wuchtigen Vorrichtungen.

Ausgehend von diesem Stand der Technik ist es Aufgabe der vorliegenden Erfindung, eine Schweißelektrode, ein Verfahren und eine Vorrichtung zum Widerstandsschweißen zur Verfügung zu stellen und eine Verwendung vorzuschlagen, wobei mit möglichst wenigen Modifikationen bisher verwendeter Schweißelektroden eine effiziente Erwärmung des zu schweißenden Sandwichblechs bei einem kompakten Aufbau erzielt werden kann.

Die genannte Aufgabe wird nach einer ersten Lehre der vorliegenden Erfindung bei einer gattungsgemäßen Schweißelektrode dadurch gelöst, dass ein in die Schweißelektrode integriertes oder integrierbares, elektrisch leitendes Widerstandselement, welches elektrisch leitend mit dem Schweißelektrodenkörper und der Schweißelektrodenkappe verbunden oder verbindbar ist, zur Erwärmung des Bauteils vorgesehen ist.

Durch das elektrisch leitende Widerstandselement wird erreicht, dass durch einen elektrischen Stromfluss zum Erwärmen (Vorwärmstrom) durch das elektrisch leitende Widerstandselement elektrische Energie in Wärme umgewandelt wird. Die Wärmeentwicklung erfolgt dabei einerseits durch den Übergangswiderstand zwischen dem elektrischen Widerstandselement und dem Schweißelektrodenkörper und/oder der Schweißelektrodenkappe und andererseits durch den elektrischen Widerstand des elektrischen Widerstandselements selbst. Dadurch kann wiederum das Bauteil, welches mit der Schweißelektrodenkappe zur Herstellung einer Schweißverbindung kontaktiert wird, erwärmt werden. Ist das Bauteil ein Sandwichblech, kann damit beispielsweise auf einfache Weise die thermoplastische Kunststoffschicht des Sandwichblechs aufgeweicht werden, sodass die Deckbleche zusammengedrückt werden können.

Anschließend kann das Sandwichblech mit einem weiteren Bauteil, beispielsweise einem weiteren Blech, ebenfalls unter Verwendung der Schweißelektrode mittels eines Stromflusses zum Verschweißen (Schweißstrom) verschweißt werden. Der Stromfluss zum Verschweißen kann dabei über einen ersten Stromkreis und der Stromfluss zum Erwärmen über einen zweiten Stromkreis erfolgen. Die Schweißelektrode kann dabei sowohl Teil des ersten als auch des zweiten Stromkreises sein.

Vorteilhaft ist, dass durch die Integration des elektrischen Widerstandselements in die Schweißelektrode eine kompakte Schweißelektrode bereitgestellt werden kann. Das Widerstandselement kann dabei beispielsweise besonders einfach als Block ausgebildet sein. Gleichzeitig wird dadurch, dass das elektrische Widerstandselement elektrisch leitend mit dem Schweißelektrodenkörper und der Schweißelektrodenkappe verbunden oder verbindbar ist, erreicht, dass keine separate Ansteuerung notwendig ist und die Schweißelektrode lediglich geringfügig zur Integration des elektrischen Widerstandselements modifiziert werden braucht. Ein elektrischer Stromfluss durch das Widerstandselement kann nämlich über den Schweißelektrodenkörper und die Schweißelektrodenkappe erzielt werden. Hierzu können sowohl der Schweißelektrodenkörper als auch die Schweißelektrodenkappe elektrisch leitendes Material aufweisen oder aus diesem hergestellt sein. Dabei kann das Widerstandselement mittelbar oder unmittelbar elektrisch leitend mit dem Schweißelektrodenkörper und/oder der Schweißelektrodenkappe verbunden oder verbindbar sein. Besonders vorteilhaft ist die Schweißelektrode dabei derart ausgebildet, dass der Schweißelektrodenkörper über, vorzugsweise ausschließlich über das Widerstandselement mit der Schweißelektrodenkappe elektrisch leitend verbunden oder verbindbar ist. Dadurch kann der gesamte Strom zur Erwärmung über das Widerstandselement geführt werden. Eine Umgehung des Widerstandelements wird vermieden.

Zur Verbindung der Schweißelektrodenkappe mit dem Schweißelektrodenkörper kann diese beispielsweise lösbar mit dem Schweißelektrodenkörper verbunden oder verbindbar sein. Beispielsweise ist die Schweißelektrodenkappe auf den Schweißelektrodenkörper aufsetzbar. Hierzu kann der Schweißelektrodenkörper beispielsweise an einem ersten Ende an die Schweißelektrodenkappe angepasst sein. Der Schweißelektrodenkörper kann beispielsweise eine im Wesentlichen längliche Erstreckung mit einem ersten Ende zur Anbindung der Schweißelektrodenkappe und einem zweiten Ende aufweisen. Insbesondere kann der Schweißelektrodenkörper als Pinole ausgebildet sein.

Ist gemäß einer Ausgestaltung der Schweißelektrode das Widerstandselement im Bereich der vorgesehenen Kontaktierung der Schweißelektrode mit dem zu schweißenden Bauteil in die Schweißelektrode integriert oder integrierbar, kann eine besonders effizienter Wärmeübertragung von der Schweißelektrode auf das zu kontaktierende Bauteil erfolgen. Beispielsweise kann das Widerstandselement im Bereich der Schweißelektrodenkappe vorgesehen sein.

Gemäß einer besonders bevorzugten Ausgestaltung der Schweißelektrode ist das Widerstandselement in den Schweißelektrodenkörper integriert oder integrierbar. Vorzugsweise ist das Widerstandselement im Bereich eines ersten Endes des Schweißelektrodenkörpers angeordnet oder anordenbar, welches zur Verbindung mit der Schweißelektrodenkappe vorgesehen ist. Beispielsweise ist eine Aufnahme für das Widerstandselement am ersten Ende des Schweißelektrodenkörpers vorgesehen. Bevorzugt kann für eine einfache und platzsparende Integration eine Aufnahme in Form einer Aussparung zum Einsetzen des Widerstandelements im Schweißelektrodenkörper vorgesehen sein. Beispielsweise kann das Widerstandselement lösbar oder unlösbar in den Schweißelektrodenkörper integriert sein.

Besonders vorteilhaft an dieser Ausgestaltung ist, dass die Verwendung von Standard-Schweißelektrodenkappen ermöglicht wird, da lediglich eine Modifikation an dem Schweißelektrodenkörper erforderlich ist. Es können also die bisher verwendeten Schweißelektrodenkappen weiterhin ohne weitere Modifikationen verwendet werden. Im Ergebnis kann das Widerstandselement besonders einfach im Bereich der Kontaktierung der Schweißelektrode mit dem zu schweißenden Bauteil in die Schweißelektrode integriert werden.

Gemäß einer weiteren besonders bevorzugten Ausgestaltung der Schweißelektrode ist das Widerstandselement in die Schweißelektrodenkappe integriert oder integrierbar. Beispielsweise kann für eine einfache und platzsparende Integration eine Aufnahme in Form einer Aussparung zum Einsetzen des Widerstandelements in der Schweißelektrodenkappe vorgesehen sein. Beispielsweise kann das Widerstandselement lösbar oder unlösbar in der Schweißelektrodenkappe integriert sein.

Im Ergebnis kann dadurch die Verwendung von Standard-Schweißelektrodenkörpern erreicht werden, da lediglich eine Modifikation an der Schweißelektrodenkappe erforderlich ist. Es können also die bisher verwendeten Schweißelektrodenkörper weiterhin ohne weitere Modifikationen verwendet werden. Im Ergebnis kann das Widerstandselement besonders einfach im Bereich der Kontaktierung der Schweißelektrode mit dem zu schweißenden Bauteil in die Schweißelektrode integriert werden. Zudem kann in diesem Fall das Widerstandselement vorteilhaft mit der Schweißelektrodenkappe getauscht werden.

Besonders vorteilhaft an den beiden zuvor beschriebenen Ausgestaltungen ist, dass die Integration des Widerstandselements in den Schweißelektrodenkörper beziehungsweise in die Schweißelektrodenkappe lediglich der Anpassung von entweder dem Schweißelektrodenkörper oder der Schweißelektrodenkappe bedarf, aber nicht der gesamten Schweißelektrode.

Gemäß einer weiteren Ausgestaltung der Schweißelektrode weist die Schweißelektrode zumindest ein erstes Material zur Leitung eines Schweißstroms auf, wobei der spezifische elektrische Widerstand des Widerstandselements größer ist als der spezifische elektrische Widerstand des ersten Materials der Schweißelektrode zur Leitung des Schweißstroms. Damit kann die Wärmeentwicklung auf das Widerstandselement konzentriert werden, sodass ein gezielter Wärmeeintrag auf das zu kontaktierende Bauteil erfolgen kann.

Gemäß einer weiteren Ausgestaltung der Schweißelektrode bestehen der Schweißelektrodenkörper und/oder die Schweißelektrodenkappe zumindest teilweise aus dem ersten Material zur Leitung des Schweißstroms, wobei das erste Material vorzugsweise ein Metall, insbesondere Kupfer oder eine Kupferlegierung, ist. Hierdurch kann der Aufbau des Schweißelektrodenkörpers beziehungsweise der Schweißelektrodenkappe einfach gehalten werden und zudem eine gute elektrische Leitfähigkeit erzielt werden, welche keine unnötige Wärmeerzeugung hervorruft.

Gemäß einer weiteren Ausgestaltung der Schweißelektrode weist die Schweißelektrode eine den Schweißelektrodenkörper zumindest teilweise umgebende, vom Schweißelektrodenkörper elektrisch isolierte, elektrisch leitende Schweißelektroden-Ummantelung auf. Hierdurch kann vorteilhaft sowohl die Stromhinführung als auch die Stromrückführung für einen Stromfluss zum Erwärmen kompakt über die Schweißelektrode realisiert werden.

Besonders vorteilhaft ist die elektrisch leitende Schweißelektroden-Ummantelung zur Anbindung einer Stromrückführung ausgebildet. Beispielsweise weist die Schweißelektroden-Ummantelung einen Anschlussbereich für einen Stromleiter auf.

Gemäß einer weiteren Ausgestaltung der Schweißelektrode besteht die elektrisch leitende Schweißelektroden-Ummantelung zumindest teilweise aus einem Metall, insbesondere aus Kupfer oder einer Kupferlegierung, beispielsweise Messing. Hierdurch wird eine gute elektrische Leitfähigkeit der Schweißelektroden-Ummantelung erzielt. Dadurch kann eine unerwünschte Wärmeerzeugung entlang des Schweißelektrodenkörpers reduziert oder vermieden werden.

Gemäß einer weiteren Ausgestaltung der Schweißelektrode weist die Schweißelektrode zwischen der elektrisch leitenden Schweißelektroden-Ummantelung und dem Schweißelektrodenkörper eine den Schweißelektrodenkörper zumindest teilweise umgebende elektrische Isolierung auf. Diese kann beispielsweise ebenfalls als zwischen der elektrisch leitenden Schweißelektroden-Ummantelung und dem Schweißelektrodenkörper angeordnete Ummantelung vorgesehen sein. Durch die elektrische Isolierung kann auf einfache Weise ein unerwünschter Stromfluss zwischen dem Schweißelektrodenkörper und der elektrisch leitenden Schweißelektroden-Ummantelung erzielt werden. Somit kann ein Stromfluss zum Vorwärmen über die Schweißelektrode sowohl zum Widerstandselemente hingeführt als auch weggeführt werden.

Gemäß einer weiteren Ausgestaltung ist die Schweißelektrode derart ausgebildet, dass der Schweißelektrodenkörper über das Widerstandselement und die Schweißelektrodenkappe mit der Schweißelektroden-Ummantelung elektrisch leitend verbunden oder verbindbar ist. Vorzugsweise ist der Schweißelektrodenkörper ausschließlich über das Widerstandselement und die Schweißelektrodenkappe mit der Schweißelektroden-Ummantelung elektrisch leitend verbunden oder verbindbar. Dadurch kann der Strom zum Vorwärmen auf einfache Weise durch das Widerstandselement geleitet werden und mittels des Schweißelektrodenkörpers und der Schweißelektroden-Ummantelung hingeführt und zurückgeführt werden. Im Ergebnis ist so ein Minimum an Bauteilen und Modifikationen erforderlich, um den Vorwärmstrom über das Widerstandelement zu führen.

Gemäß einer weiteren Ausgestaltung der Schweißelektrode besteht das Widerstandselement zumindest teilweise aus Metall und der spezifische elektrische Widerstand des Widerstandselements ist vorzugsweise größer als der spezifische elektrische Widerstand von beispielsweise Kupfer. Mit einem Widerstandselement aus Metall kann dieses auf einfache Weise elektrisch leitend in die Schweißelektrode integriert werden. Es hat sich zudem gezeigt, dass für eine effiziente Wärmeerzeugung ein spezifischer elektrischer Widerstand größer, vorzugsweise deutlich größer als derjenige von beispielsweise Kupfer vorteilhaft ist. Besonders bevorzugt weist das elektrische Widerstandselement Wolfram auf oder ist aus Wolfram hergestellt. Grundsätzlich sind jedoch auch andere Metalle mit einem im Vergleich zu beispielsweise Kupfer höheren spezifischen elektrischen Widerstand denkbar.

Gemäß einer weiteren Ausgestaltung der Schweißelektrode weist der Schweißelektrodenkörper Kühlkanäle zur Kühlung der Schweißelektrode auf. Damit kann eine Kühlung des Schweißelektrodenkörpers und damit der Schweißelektrode erzielt werden, sodass eine zu starke Erwärmung durch den Stromfluss durch das Widerstandselement vermieden werden kann.

Gemäß einer zweiten Lehre der vorliegenden Erfindung wird die eingangs genannte Aufgabe bei einem gattungsgemäßen Verfahren zum Widerstandsschweißen eines Sandwichblechs mit mindestens einem weiteren metallischen Bauteil dadurch gelöst, dass die erste Schweißelektrode eine erfindungsgemäße Schweißelektrode ist und der zu schweißende Bereich des Sandwichblechs durch einen Stromfluss in einem zweiten Stromkreis erwärmt wird, welcher den Schweißelektrodenkörper, das Widerstandselement und die Schweißelektrodenkappe der ersten Schweißelektrode umfasst.

Es hat sich herausgestellt, dass bei der Verwendung einer erfindungsgemäßen Schweißelektrode in einem zweiten Stromkreis, welcher den Schweißelektrodenkörper, das elektrische Widerstandselement und die Schweißelektrodenkappe der ersten Schweißelektrode umfasst, auf einfache Weise eine Erwärmung des Schweißbereichs mit einem kompakten Aufbau erzielt werden kann. Durch das elektrische Widerstandselement kann aufgrund des elektrischen Widerstandes das Erwärmen des Schweißbereichs durchgeführt werden, ohne dass beispielsweise zusätzliche Strombrücken an den zu verschweißenden Bauteilen notwendig sind. Wie bereits dargestellt, erfolgt die Wärmeentwicklung dabei einerseits durch den Übergangswiderstand zwischen dem elektrischen Widerstandselement und dem Schweißelektrodenkörper und/oder der Schweißelektrodenkappe und andererseits durch den elektrischen Widerstand des elektrischen Widerstandselements selbst.

Die zweite Schweißelektrode kann beispielsweise ähnlich der ersten Schweißelektrode aufgebaut sein, beispielsweise einen Schweißelektrodenkörper und eine Schweißelektrodenkappe aufweisen. Im Unterscheid zur ersten Schweißelektrode weist die zweite Schweißelektrode jedoch bevorzugt kein elektrisches Widerstandselement zur Wärmeerzeugung auf.

Ist das elektrische Widerstandselement beispielsweise in den Schweißelektrodenkörper der ersten Schweißelektrode integriert, können vorteilhaft die gleichen Schweißelektrodenkappen für die erste und die zweite Schweißelektrode verwendet werden. Ist das elektrische Widerstandselement beispielsweise in die Schweißelektrodenkappe der ersten Schweißelektrode integriert, können vorteilhaft die gleichen Schweißelektrodenkörper für die erste und die zweite Schweißelektrode verwendet werden.

Gemäß einer Ausgestaltung des erfindungsgemäßen Verfahrens erfolgt der Stromfluss zum Verschweißen in dem ersten Stromkreis über den Schweißelektrodenkörper, das Widerstandselement und die Schweißelektrodenkappe der ersten Schweißelektrode, das Sandwichblech, das weitere metallische Bauteil und die zweite mit dem weiteren metallischen Bauteil in Kontakt stehende Schweißelektrode. Das elektrische Widerstandselement muss beim Verschweißen also nicht zwangsweise wieder entfernt werden.

Gemäß einer weiteren Ausgestaltung des erfindungsgemäßen Verfahrens erfolgt der Stromfluss zum Erwärmen in dem zweiten Stromkreis über den Schweißelektrodenkörper, das Widerstandselement, die Schweißelektrodenkappe und die elektrisch leitende Schweißelektroden-Ummantelung der ersten Schweißelektrode und einen daran angeschlossenen Nebenanschlussleiter. Der zweite Stromkreis umfasst also insbesondere nicht das Sandwichblech und/oder das weitere metallische Bauteil.

Gemäß einer dritten Lehre der vorliegenden Erfindung wird die eingangs genannte Aufgabe bei einer gattungsgemäßen Vorrichtung zum Widerstandsschweißen eines Sandwichblechs dadurch gelöst, dass die erste Schweißelektrode eine erfindungsgemäße Schweißelektrode ist und ein zweiter Stromkreis vorgesehen ist, wobei der zweite Stromkreis den Schweißelektrodenkörper, das Widerstandselement und die Schweißelektrodenkappe der ersten Schweißelektrode umfasst, sodass durch einen Stromfluss in dem zweiten Stromkreis der zu schweißende Bereich des Sandwichblechs erwärmt werden kann.

Bezüglich weiterer vorteilhafter Ausgestaltungen der Vorrichtung wird auf die Beschreibung der Ausführungsformen der Schweißelektrode und des Verfahrens und deren Vorteile verwiesen.

Dabei sollen durch die Beschreibung von Verfahrensschritten gemäß bevorzugter Ausführungsformen des erfindungsgemäßen Verfahrens auch entsprechende Mittel zur Durchführung der Verfahrensschritte durch bevorzugte Ausführungsformen der erfindungsgemäßen Vorrichtung offenbart sein. Ebenfalls soll durch die Offenbarung von Mitteln zur Durchführung eines Verfahrensschrittes der entsprechende Verfahrensschritt offenbart sein.

Gemäß einer vierten Lehre der vorliegenden Erfindung wird die eingangs genannte Aufgabe durch die Verwendung einer erfindungsgemäßen Schweißelektrode oder einer erfindungsgemäße Vorrichtung zum Widerstandsschweißen, insbesondere Widerstandspunktschweißen, eines Sandwichblechs, welches eine zwischen metallischen Deckschichten angeordnete thermoplastische Kunststoffschicht aufweist, mit mindestens einem weiteren metallischen Bauteil gelöst.

Im Weiteren soll die Erfindung anhand von Ausführungsbeispielen in Verbindung mit der Zeichnung näher erläutert werden. Die Zeichnung zeigt in
- Fig. 1a: im Längsschnitt eine schematische Explosionsdarstellung eines ersten Ausführungsbeispiels einer erfindungsgemäßen Schweißelektrode ohne die Schweißelektrodenkappe;
- Fig. 1b: im Längsschnitt eine schematische Darstellung des ersten Ausführungsbeispiels einer Schweißelektrode einschließlich der Schweißelektrodenkappe;
- Fig. 2a: im Längsschnitt eine schematische Explosionsdarstellung eines zweiten Ausführungsbeispiels einer erfindungsgemäßen Schweißelektrode ohne die Schweißelektrodenkappe;
- Fig. 2b: im Längsschnitt eine schematische Darstellung des zweiten Ausführungsbeispiels einer Schweißelektrode einschließlich der Schweißelektrodenkappe;
- Fig. 3: eine schematische Darstellung eines Ausführungsbeispiels einer erfindungsgemäßen Vorrichtung zur Durchführung eines Ausführungsbeispiels eines erfindungsgemäßen Verfahrens;
- Fig. 4a: eine vergrößerte Ansicht des zu schweißenden Bereichs unter Verwendung der Schweißelektrode aus Fig. 1;
- Fig. 4b: eine vergrößerte Ansicht des zu schweißenden Bereichs unter Verwendung der Schweißelektrode aus Fig. 2.

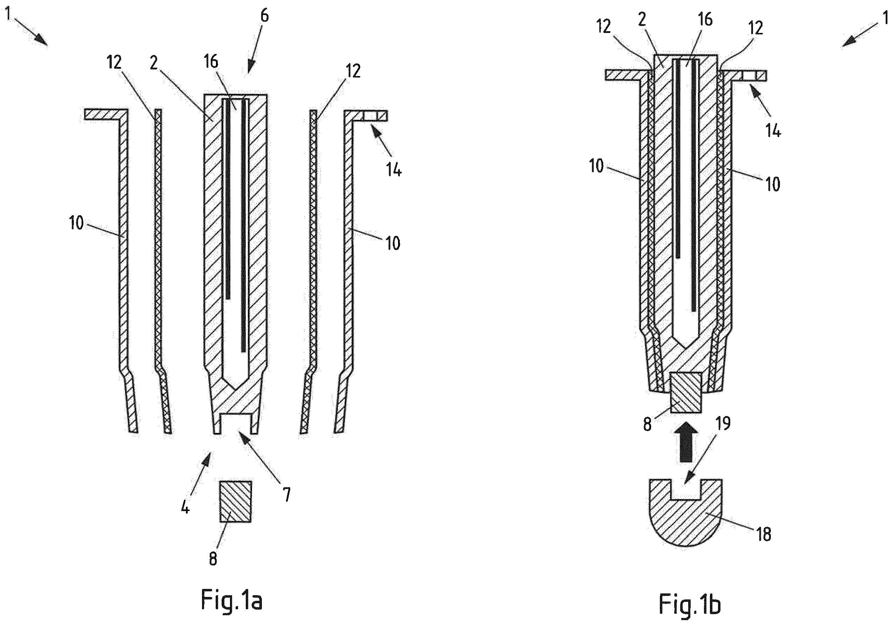

Fig. 1a zeigt zunächst im Längsschnitt eine schematische Explosionsdarstellung eines ersten Ausführungsbeispiels einer erfindungsgemäßen Schweißelektrode ohne die Schweißelektrodenkappe. Die Schweißelektrode 1 umfasst einen Schweißelektrodenkörper 2. Dieser ist als Pinole im Wesentlichen länglich mit einem ersten Ende 4 und einem zweiten Ende 6 ausgebildet. An seinem ersten Ende 4 weist der Schweißelektrodenkörper 2 eine Aussparung 7 zur Aufnahme eines elektrisch leitenden Widerstandselements 8 auf. Das Widerstandselement 8 und die Aufnahme 7 sind dabei aneinander angepasst, sodass das Widerstandselement 8 in den Schweißelektrodenkörper 2 integrierbar und elektrisch leitend mit dem Schweißelektrodenkörper 2 verbindbar ist.

Der Schweißelektrodenkörper 2 ist in diesem Fall aus einem ersten Material, einer Kupferlegierung, zur Leitung eines Schweißstroms hergestellt. Das Widerstandselement 8 ist aus Wolfram hergestellt und weist damit einen spezifischen elektrischen Widerstand auf, welcher größer als das erste Material des Schweißelektrodenkörpers 2 ist. Damit weist das Widerstandselement 8 einen im Vergleich zu Kupfer größeren spezifischen elektrischen Widerstand auf.

Die Schweißelektrode 1 weist weiterhin eine den Schweißelektrodenkörper 2 zumindest teilweise umgebende, vom Schweißelektrodenkörper 2 elektrisch isolierte, elektrisch leitende Schweißelektroden-Ummantelung 10 auf. Die elektrisch leitende Schweißelektroden-Ummantelung 10 besteht aus Metall, in diesem Fall aus einer Kupferlegierung wie etwa Messing. Zur Isolierung weist die Schweißelektrode 1 zwischen der elektrisch leitenden Schweißelektroden-Ummantelung 10 und dem Schweißelektrodenkörper 2 eine den Schweißelektrodenkörper 2 zumindest teilweise umgebende elektrische Isolierung 12 auf. Die Schweißelektroden-Ummantelung 10 weist zudem im Bereich des zweiten Endes 6 des Schweißelektrodenkörpers 2 einen Anschlussbereich 14 zur Anbindung einer Stromrückführung auf.

Zur Kühlung der Schweißelektrode 1 weist der Schweißelektrodenkörper 2 Kühlkanäle 16 auf, welche sich im Wesentlich vom zweiten Ende 6 zum ersten Ende 4 entlang der Länge des Schweißelektrodenkörpers 2 erstrecken.

Fig. 1b zeigt im Längsschnitt eine schematische Darstellung des ersten Ausführungsbeispiels einer Schweißelektrode aus Fig. 1, wobei auch eine Schweißelektrodenkappe 18 dargestellt ist. Die Schweißelektrodenkappe 18 besteht wie der Schweißelektrodenkörper ebenfalls aus dem ersten Material zur Leitung des Schweißstroms, in diesem Fall eine Kupferlegierung. Die Schweißelektrodenkappe 18 ist zur Kontaktierung eines zu schweißenden Bauteils ausgebildet. Dadurch, dass der Schweißelektrodenkörper 2 an das Widerstandselement 8 angepasst ist und das Widerstandselement 8 in den Schweißelektrodenkörper 2 integriert ist, verhält sich der Schweißelektrodenkörper 2 mit dem Widerstandselement 8 für die Schweißelektrodenkappe 18 wie ein Standard-Schweißelektrodenkörper. Dadurch kann eine Schweißelektrodenkappe 18 verwendet werden, welche trotz der Integration des Widerstandselements 8 in die Schweißelektrode 1 nicht modifiziert zu werden braucht. Vielmehr kann die Schweißelektrodenkappe 18 wie gewohnt auf den Schweißelektrodenkörper 2 in Richtung des Pfeils aufgesetzt werden. Dazu weist die

Schweißelektrodenkappe 18 eine Aussparung 19 auf, in die der Schweißelektrodenkörper 2 mit seinem ersten Ende 4 mit dem Widerstandselement 8 eingeführt werden kann.

Die Schweißelektrodenkappe 18 ist dabei derart ausgebildet, dass diese mit dem in den Schweißelektrodenkörper 2 integrierten Widerstandselement 8 und der Schweißelektroden-Ummantelung 10 elektrisch leitend verbindbar ist.

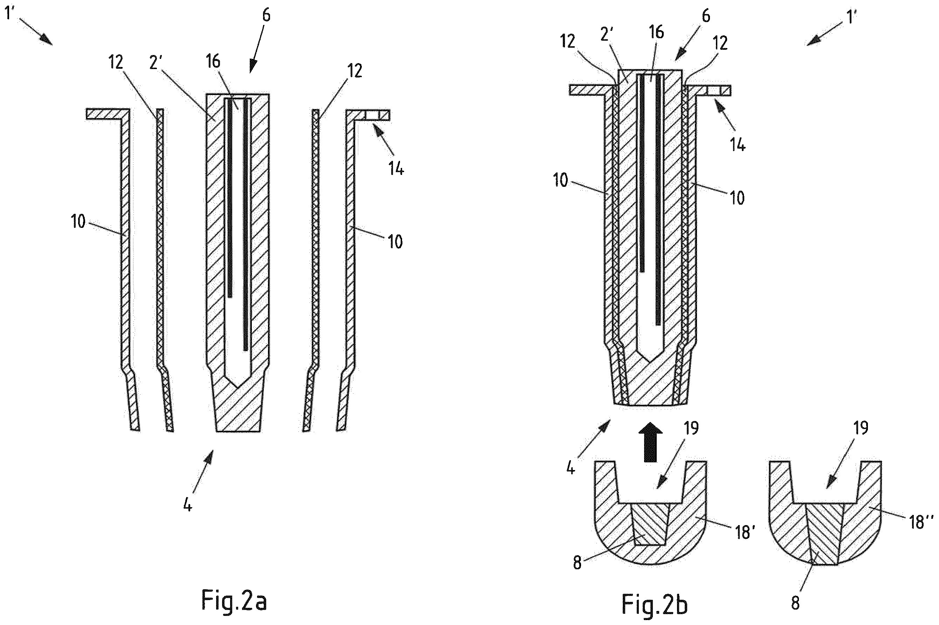

Fig. 2a zeigt im Längsschnitt eine schematische Explosionsdarstellung eines zweiten Ausführungsbeispiels einer erfindungsgemäßen Schweißelektrode 1' ohne die Schweißelektrodenkappe. Die Schweißelektrode 1' ist dabei ähnlich zu der Schweißelektrode 1 ausgeführt. Insofern wird auf die Beschreibung der Schweißelektrode 1 verwiesen. Im Unterschied zu der Schweißelektrode 1 weist die Schweißelektrode 1' allerdings kein Widerstandselement auf.

Wie in Fig. 2b dargestellt, ist das Widerstandselement 8 in die Schweißelektrodenkappe 18' integriert. Fig. 2b zeigt im Längsschnitt eine schematische Darstellung des zweiten Ausführungsbeispiels einer Schweißelektrode 1' inklusive der Schweißelektrodenkappe 18'. Wie die erste Schweißelektrodenkappe 18 besteht die Schweißelektrodenkappe 18' abgesehen von dem Widerstandselement 8 aus einer Kupferlegierung. Das Widerstandselement 8 besteht wiederum aus Wolfram, einem Material mit höherem spezifischen elektrischen Widerstand. Dadurch, dass die Schweißelektrodenkappe 18' an das Widerstandselement 8 angepasst ist und das Widerstandselement 8 in die Schweißelektrodenkappe 18' integriert ist, verhält sich die Schweißelektrodenkappe 18' mit dem Widerstandselement 8 für den Schweißelektrodenkörper 2' wie eine Standard-Schweißelektrodenkappe. Dadurch kann ein Schweißelektrodenkörper 2' verwendet werden, welcher trotz der Integration des Widerstandselements in die Schweißelektrode 1' nicht modifiziert zu werden braucht. Vielmehr kann die Schweißelektrodenkappe 18' wie gewohnt auf den Schweißelektrodenkörper 2' aufgesetzt werden.

Wie die Schweißelektrodenkappe 18 ist die Schweißelektrodenkappe 18' derart ausgebildet, dass diese mit dem Schweißelektrodenkörper 2 und der Schweißelektroden-Ummantelung 10 elektrisch leitend verbindbar ist.

In Fig. 2b ist zudem eine weiteres Ausführungsbeispiel einer Schweißelektrodenkappe 18" gezeigt. Dabei ist das Widerstandselement 8 derart in die Schweißelektrodenkappe 18" integriert, dass das Widerstandselement 8 das zu schweißenden Bauteil kontaktieren kann.

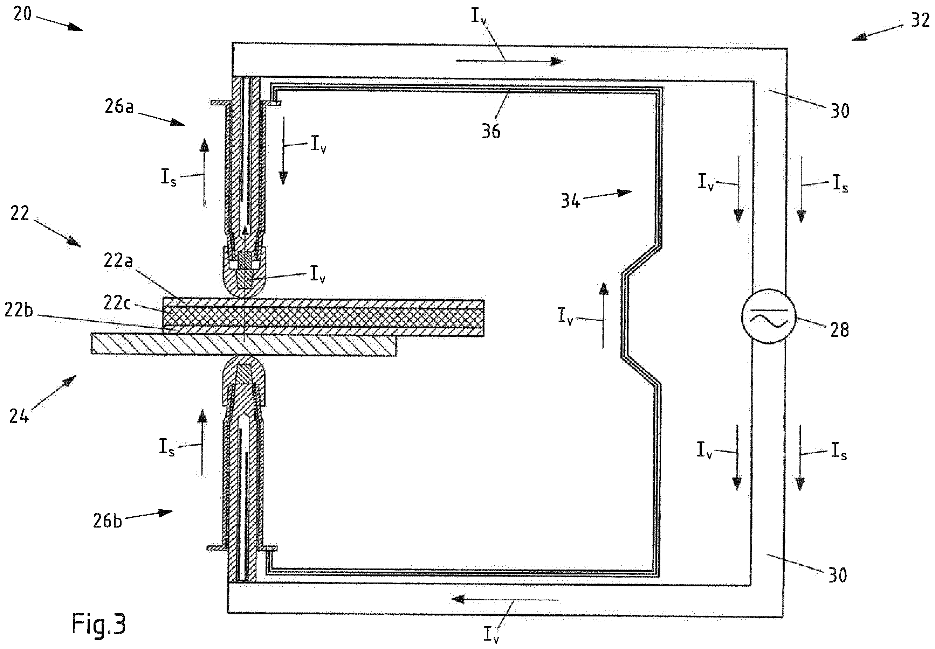

Fig. 3 zeigt eine schematische Darstellung eines Ausführungsbeispiels einer erfindungsgemäßen Vorrichtung 20 zur Durchführung eines Ausführungsbeispiels eines erfindungsgemäßen Verfahrens.

Dabei können beispielsweise die in den Fig. 1 und 2 gezeigten Schweißelektroden 1, 1' verwendet werden. Die Vorrichtung 20 ist zum Widerstandsschweißen eines Sandwichblechs 22 mit mindestens einem weiteren metallischen Bauteil 24 ausgebildet. Das Sandwichblech 22 weist eine zwischen metallischen Deckschichten aus vorzugsweise Stahl 22a, 22b angeordnete thermoplastische Kunststoffschicht 22c auf. Das weitere Bauteil 24 ist ebenfalls als Blech ausgebildet, beispielsweise als Stahlblech. Die Vorrichtung 20 weist eine erste, auf der Seite des Sandwichblechs 22 angeordnete Schweißelektrode 26a und eine zweite, auf der Seite des weiteren metallischen Bauteils 24 angeordnete Schweißelektrode 26b auf. Als erste Schweißelektrode 26a wird dabei ein Ausführungsbeispiel einer erfindungsgemäßen Schweißelektrode, beispielsweise eine der in Fig. 1 oder Fig. 2 gezeigten Schweißelektroden 1 oder 1', verwendet. Für die zweite Schweißelektrode 26b kann ebenfalls eine in Fig. 1 oder 2 gezeigt Schweißelektrode verwendet werden, jedoch braucht die zweite Schweißelektrode kein elektrisch leitendes Widerstandselement aufzuweisen.

Weiterhin weist die Vorrichtung 20 mit einer Stromquelle 28 und elektrischen Leitungen 30 Mittel zur Bereitstellung eines ersten Stromkreises 32 auf, welche einen Schweißstrom I_{S} zumindest über die erste Schweißelektrode 26a und die zweite Schweißelektrode 26b führen. Der erste Stromkreis 32 umfasst dabei die Stromquelle 28, die elektrischen Leitungen 30, die erste Schweißelektrode 26a, das Sandwichblech 22, das weitere Bauteil 24 und die zweite Schweißelektrode 26b. Weiterhin weist die Vorrichtung 20 mit der ersten Schweißelektrode 26a Mittel zur Verdrängung der Kunststoffschicht 22c des Sandwichblechs 22 aus dem zu schweißenden Bereich des Sandwichblechs 22 auf.

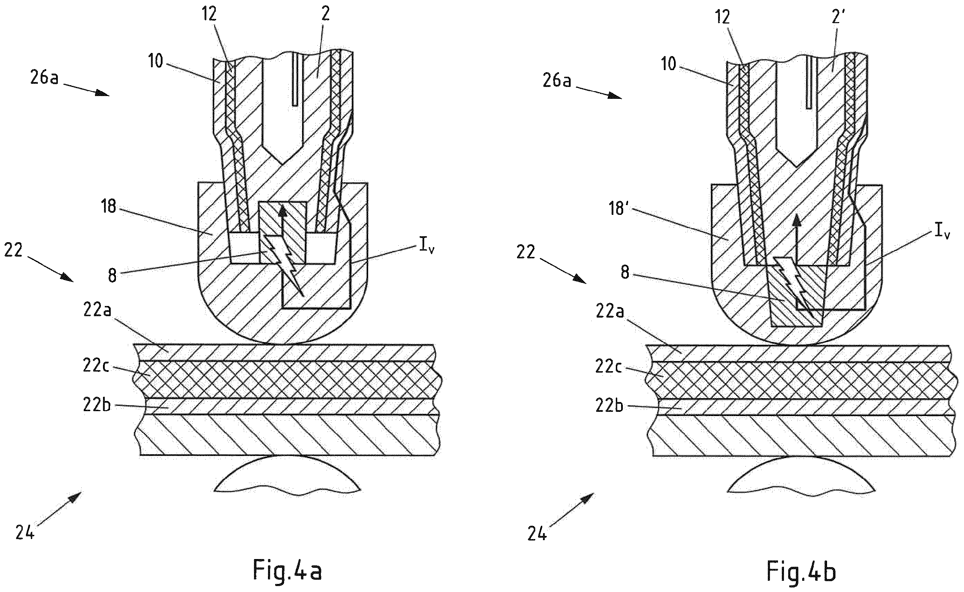

Weiterhin ist ein zweiter Stromkreis 34 zur Führung eines Vorwärmstroms Iᵥ vorgesehen. Der zweite Stromkreis 34 umfasst dabei die Stromquelle 28, die elektrischen Leitungen 30, die erste Schweißelektrode 26a, die elektrischen Leitungen 36 und die zweite Schweißelektrode 26b. In Bezug auf die erste Schweißelektrode 26a umfasst der zweite Stromkreis 34 den Schweißelektrodenkörper, das Widerstandselement, die Schweißelektrodenkappe und die Schweißelektroden-Ummantelung der ersten Schweißelektrode 26a (siehe auch Fig. 4), sodass durch einen Stromfluss in dem zweiten Stromkreis 34 der zu schweißende Bereich des Sandwichblechs 22 erwärmt werden kann. Es ist alternativ denkbar, dass der zweite Stromkreis 34 beispielsweise auch von der ersten Schweißelektrode 26a mittels der elektrischen Leitungen 36 ohne Verwendung der zweiten Schweißelektrode 26b direkt zur Stromquelle 28 zurückführt.

Mit der Vorrichtung 20 kann ein Verfahren zum Widerstandsschweißen des Sandwichblechs 22 mit dem weiteren metallischen Bauteil 24 durchgeführt werden. Bei dem Verfahren wird der zu schweißende Bereich des Sandwichblechs 22 derart erwärmt, dass die thermoplastische Kunststoffschicht 22c aufweicht und durch Zusammendrücken der Deckschichten 22a, 22b aus dem Schweißbereich verdrängt wird. Hierzu können Mittel zur Kraftbeaufschlagung der Schweißelektroden, beispielsweise eine Schweißzange vorgesehen sein. Der zu schweißende Bereich des Sandwichblechs 22 wird dabei durch einen Stromfluss zum Vorwärmen I_{V} in dem zweiten Stromkreis 34 erwärmt. Wie bereits dargestellt, umfasst der zweite Stromkreis 34 dabei den Schweißelektrodenkörper, das Widerstandelement, die Schweißelektrodenkappe und die Schweißelektroden-Ummantelung der ersten Schweißelektrode 26a. Aufgrund des spezifischen elektrischen Widerstands des Widerstandselements kann der Stromfluss durch das Widerstandselement die erste Schweißelektrode 26a und somit den zu schweißenden Bereich des Sandwichblechs 22 erwärmen, sodass die thermoplastische Kunststoffschicht 22c aufweicht und verdrängt werden kann.

Da nun zwischen den Schweißelektroden 26a, 26b eine elektrisch leitende Verbindung über die Bauteile 22, 24 besteht, können im Anschluss die Deckschichten 22a, 22b mit dem weiteren Bauteil 24 durch einen elektrischen Stromfluss zum Schweißen I_{S} in dem ersten Stromkreis 32 über die erste Schweißelektrode 26a und die zweite Schweißelektrode 26b miteinander verschweißt werden.

Fig. 4a zeigt eine vergrößerte Ansicht des zu schweißenden Bereichs unter Verwendung der Schweißelektrode 1 aus Fig. 1. Der Vorwärmstrom I_{V} fließt im zweiten Stromkreis 34 über die elektrische Leitung 36 und den Anschlussbereich 14 der Schweißelektroden-Ummantelung 10. Aufgrund der Kontaktierung der Schweißelektrodenkappe 18 mit der Schweißelektroden-Ummantelung 10 fließt der der Vorwärmstrom I_{V} weiterhin über die Schweißelektrodenkappe 18, das in den Schweißelektrodenkörper integrierte Widerstandselement 8 und den Schweißelektrodenkörper 2. Durch den erhöhten elektrischen Widerstand des Widerstandselements 8 und durch den Übergangswiderstand zwischen Widerstandselement 8 und Schweißelektrodenkappe 18 beziehungsweise Schweißelektrodenkörper 2 entsteht die notwendige Wärme, um die Kunststoffschicht 22c lokal zu erwärmen.

Fig. 4b zeigt eine vergrößerte Ansicht des zu schweißenden Bereichs unter Verwendung der Schweißelektrode 1' aus Fig. 2. Auch hier ist das Widerstandselement 8, welches hier in die Schweißelektrodenkappe 18' integriert ist, einerseits über die Schweißelektrodenkappe 18', die Schweißelektroden-Ummantelung 10, den Anschlussbereich 14 und die elektrische Leitung 36 und andererseits über den Schweißelektrodenkörper 2' und die elektrische Leitung 30 mit der Stromquelle 28 verbunden. Auch in diesem Fall entsteht durch den erhöhten elektrischen Widerstand des Widerstandselements 8 und durch den Übergangswiderstand zwischen dem Widerstandselement 8 und der Schweißelektrodenkappe 18' beziehungsweise dem Schweißelektrodenkörper 2'die notwendige Wärme, um die Kunststoffschicht 22c lokal zu erwärmen.

## Patentansprüche

1. Schweißelektrode umfassend
- einen Schweißelektrodenkörper (2, 2') und
- eine mit dem Schweißelektrodenkörper (2, 2') verbundene oder verbindbare Schweißelektrodenkappe (18, 18', 18") zur Kontaktierung der Schweißelektrode (1, 1', 26a) mit einem Bauteil (22) zur Herstellung einer Schweißverbindung,
**dadurch gekennzeichnet, dass**
ein in die Schweißelektrode (1, 1', 26a) integriertes oder integrierbares, elektrisch leitendes Widerstandselement (8), welches elektrisch leitend mit dem Schweißelektrodenkörper (2, 2') und der Schweißelektrodenkappe (18, 18', 18") verbunden oder verbindbar ist, zur Erwärmung des Bauteils (22) vorgesehen ist,
die Schweißelektrode (1, 1', 26a) derart ausgebildet ist, dass der Schweißelektrodenkörper (2, 2') über das Widerstandselement (8) und die Schweißelektrodenkappe (18, 18', 18") mit einer den Schweißelektrodenkörper (2, 2') zumindest teilweise umgebenden, vom Schweißelektrodenkörper (2, 2') elektrisch isolierten, elektrisch leitenden Schweißelektroden-Ummantelung (10) elektrisch leitend verbunden oder verbindbar ist.

2. Schweißelektrode nach Anspruch 1,
**dadurch gekennzeichnet, dass**
das Widerstandselement (8) im Bereich der vorgesehenen Kontaktierung der Schweißelektrode (1, 1', 26a) mit dem zu schweißenden Bauteil (22) in die Schweißelektrode (1, 1', 26a) integriert oder integrierbar ist.

3. Schweißelektrode nach einem der Ansprüche 1 oder 2,
**dadurch gekennzeichnet, dass**
das Widerstandselement (8) in den Schweißelektrodenkörper (2, 2') integriert oder integrierbar ist.

4. Schweißelektrode nach einem der Ansprüche 1 bis 3,
**dadurch gekennzeichnet, dass**
das Widerstandselement (8) in die Schweißelektrodenkappe (18, 18', 18") integriert oder integrierbar ist.

5. Schweißelektrode nach einem der Ansprüche 1 bis 4,
**dadurch gekennzeichnet, dass**
die Schweißelektrode (1, 1', 26a) zumindest ein erstes Material zur Leitung eines Schweißstroms (I_{S}) aufweist, wobei der spezifische elektrische Widerstand des Widerstandselements (8) größer ist als der spezifische elektrische Widerstand des ersten Materials der Schweißelektrode (1, 1', 26a) zur Leitung des Schweißstroms (I_{S}).

6. Schweißelektrode nach Anspruch 5,
**dadurch gekennzeichnet, dass**
der Schweißelektrodenkörper (2, 2') und/oder die Schweißelektrodenkappe (18, 18', 18") zumindest teilweise aus dem ersten Material zur Leitung des Schweißstroms (I_{S}) bestehen, wobei das erste Material vorzugsweise ein Metall, insbesondere Kupfer oder eine Kupferlegierung, ist.

7. Schweißelektrode nach einem der Ansprüche 1 bis 6,
**dadurch gekennzeichnet, dass**
die elektrisch leitende Schweißelektroden-Ummantelung (10) zumindest teilweise aus einem Metall, insbesondere aus Kupfer oder einer Kupferlegierung, beispielsweise Messing, besteht.

8. Schweißelektrode nach Anspruch 7,
**dadurch gekennzeichnet, dass**
die Schweißelektrode zwischen der elektrisch leitenden Schweißelektroden-Ummantelung (10) und dem Schweißelektrodenkörper (2, 2') eine den Schweißelektrodenkörper (2, 2') zumindest teilweise umgebende elektrische Isolierung (12) aufweist.

9. Schweißelektrode nach einem der Ansprüche 1 bis 8,
**dadurch gekennzeichnet, dass**
das Widerstandselement (8) zumindest teilweise aus Metall besteht und der spezifische elektrische Widerstand des Widerstandselements (8) vorzugsweise größer als der spezifische elektrische Widerstand von Kupfer ist.

10. Schweißelektrode nach einem der Ansprüche 1 bis 9,
**dadurch gekennzeichnet, dass**
der Schweißelektrodenkörper (2, 2') Kühlkanäle (16) zur Kühlung der Schweißelektrode (1, 1', 26a) aufweist.

11. Verfahren zum Widerstandsschweißen eines Sandwichblechs mit mindestens einem weiteren metallischen Bauteil, wobei das Sandwichblech zwei metallische Deckschichten und eine zwischen den metallischen Deckschichten angeordnete thermoplastische Kunststoffschicht aufweist, bei welchem der zu schweißende Bereich des Sandwichblechs derart erwärmt wird, dass die thermoplastische Kunststoffschicht aufweicht und durch Zusammendrücken der Deckschichten aus dem Schweißbereich verdrängt wird und die Deckschichten mit dem weiteren Bauteil durch einen elektrischen Stromfluss in einem ersten Stromkreis über eine erste, auf der Seite des Sandwichblechs angeordnete Schweißelektrode und eine zweite, auf der Seite des weiteren metallischen Bauteils angeordnete Schweißelektrode miteinander verschweißt werden,
**dadurch gekennzeichnet, dass**
die erste Schweißelektrode eine Schweißelektrode nach einem der Ansprüche 1 bis 10 ist und der zu schweißende Bereich des Sandwichblechs durch einen Stromfluss in einem zweiten Stromkreis erwärmt wird, welcher den Schweißelektrodenkörper, das Widerstandselement und die Schweißelektrodenkappe der ersten Schweißelektrode umfasst.

12. Vorrichtung zum Widerstandsschweißen eines Sandwichblechs (22), welches eine zwischen metallischen Deckschichten (22a, 22b) angeordnete thermoplastische Kunststoffschicht (22c) aufweist, mit mindestens einem weiteren metallischen Bauteil (24),
- mit einer ersten, auf der Seite des Sandwichblechs (22) anordenbaren Schweißelektrode (1, 1', 26a) und mit einer zweiten, auf der Seite des weiteren metallischen Bauteils (24) anordenbaren Schweißelektrode (26b),
- mit Mitteln (28, 30) zur Bereitstellung eines ersten Stromkreises (32), welche einen Schweißstrom (I_{S}) zumindest über die erste und die zweite Schweißelektrode (1, 1', 26a, 26b) führen, und
- mit Mitteln (1, 1', 26a) zur Verdrängung der Kunststoffschicht (22c) des Sandwichblechs (22) aus dem zu schweißenden Bereich des Sandwichblechs (22),
**dadurch gekennzeichnet, dass**
die erste Schweißelektrode (1, 1', 26a) eine Schweißelektrode nach einem der Ansprüche 1 bis 10 ist und ein zweiter Stromkreis (34) vorgesehen ist, wobei der zweite Stromkreis (34) den Schweißelektrodenkörper (2, 2'), das Widerstandselement (8) und die Schweißelektrodenkappe (18, 18', 18") der ersten Schweißelektrode (1, 1', 26a) umfasst, sodass durch einen Stromfluss in dem zweiten Stromkreis (34) der zu schweißende Bereich des Sandwichblechs (22) erwärmt werden kann.

13. Verwendung einer Schweißelektrode nach einem der Ansprüche 1 bis 10 oder einer Vorrichtung nach Anspruch 12 zum Widerstandsschweißen, insbesondere Widerstandspunktschweißen, eines Sandwichblechs, welches eine zwischen metallischen Deckschichten angeordnete thermoplastische Kunststoffschicht aufweist, mit mindestens einem weiteren metallischen Bauteil.

## Claims

1. Welding electrode comprising
- a welding electrode body (2, 2') and
- a welding electrode cap (18, 18', 18") which is connected or can be connected to the welding electrode body (2, 2') for making contact between the welding electrode (1, 1', 26a) and a component (22) for producing a welded connection,
**characterized in that**
an electrically conductive resistance element (8) integrated or which can be integrated in the welding electrode (1, 1', 26a) and which is connected or can be connected in electrically conductive manner to the welding electrode body (2, 2') and the welding electrode cap (18, 18', 18") is provided for the heating of the component (22), the welding electrode (1, 1', 26a) is designed so that the welding electrode body (2, 2') is connected or connectible in electrically conductive manner to an electrically conductive welding electrode jacketing (10), at least partly surrounding the welding electrode body (2, 2') and electrically insulated from the welding electrode body (2, 2'), across the resistance element (8) and the welding electrode cap (18, 18', 18").

2. Welding electrode according to Claim 1, **characterized in that** the resistance element (8) is integrated or integrable in the welding electrode (1, 1', 26a) in the region of the intended contacting of the welding electrode (1, 1', 26a) with the component (22) to be welded.

3. Welding electrode according to one of Claims 1 or 2, **characterized in that** the resistance element (8) is integrated or integrable in the welding electrode body (2, 2').

4. Welding electrode according to one of Claims 1 to 3, **characterized in that** the resistance element (8) is integrated or integrable in the welding electrode cap (18, 18', 18").

5. Welding electrode according to one of Claims 1 to 4, **characterized in that** the welding electrode (1, 1', 26a) comprises at least a first material for conducting a welding current (I_{S}), where the electrical resistivity of the resistance element (8) is greater than the electrical resistivity of the first material of the welding electrode (1, 1', 26a) for conducting the welding current (I_{S}).

6. Welding electrode according to Claim 5, **characterized in that** the welding electrode body (2, 2') and/or the welding electrode cap (18, 18', 18") consist at least partly of the first material for conducting the welding current (I_{S}), while the first material is preferably a metal, especially copper or a copper alloy.

7. Welding electrode according to one of Claims 1 to 6, **characterized in that** the electrically conductive welding electrode jacketing (10) consists at least partly of a metal, especially of copper or a copper alloy, such as brass.

8. Welding electrode according to Claim 7, **characterized in that** the welding electrode comprises between the electrically conductive welding electrode jacketing (10) and the welding electrode body (2, 2') an electrical insulation (12) at least partly surrounding the welding electrode body (2, 2').

9. Welding electrode according to one of Claims 1 to 8, **characterized in that** the resistance element (8) consists at least partly of metal and the electrical resistivity of the resistance element (8) is preferably larger than the electrical resistivity of copper.

10. Welding electrode according to one of Claims 1 to 9, **characterized in that** the welding electrode body (2, 2') comprises cooling channels (16) for the cooling of the welding electrode (1, 1', 26a).

11. Method for the resistance welding of a sandwich panel to at least one other metallic component, wherein the sandwich panel comprises two metallic cover layers and a thermoplastic plastic layer arranged between the metallic cover layers, wherein the region of the sandwich panel to be welded is heated such that the thermoplastic plastic layer softens and is displaced from the welding region by pressing together the cover layers and the cover layers are welded together with the other component by a flow of electric current in a first circuit through a first welding electrode arranged on the side of the sandwich panel and a second welding electrode arranged on the side of the other metallic component, **characterized in that** the first welding electrode is a welding electrode according to one of Claims 1 to 10 and the region of the sandwich panel to be welded is heated by a current flow in a second circuit, which encompasses the welding electrode body, the resistance element and the welding electrode cap of the first welding electrode.

12. Device for the resistance welding of a sandwich panel (22), which comprises a thermoplastic plastic layer (22c) arranged between metallic cover layers (22a, 22b), to at least one other metallic component (24),
- with a first welding electrode (1, 1', 26a) disposable on the side of the sandwich panel (22) and with a second welding electrode (26b) disposable on the side of the other metallic component (24),
- with means (28, 30) of providing a first circuit (32) which lead a welding current (I_{S}) across at least the first and the second welding electrode (1, 1', 26a, 26b), and
- with means (1, 1', 26a) for displacement of the plastic layer (22c) of the sandwich panel (22) from the region of the sandwich panel (22) to be welded,
**characterized in that**
the first welding electrode (1, 1', 26a) is a welding electrode according to one of Claims 1 to 10 and a second circuit (34) is provided, wherein the second circuit (34) encompasses the welding electrode body (2, 2'), the resistance element (8) and the welding electrode cap (18, 18', 18") of the first welding electrode (1, 1', 26a), so that the region of the sandwich panel (22) to be welded can be heated by a current flow in the second circuit (34).

13. Use of a welding electrode according to one of Claims 1 to 10 or a device according to Claim 12 for the resistance welding, especially resistance spot welding, of a sandwich panel, which comprises a thermoplastic plastic layer arranged between metallic cover layers to at least one other metallic component.

## Revendications

1. Electrode de soudage, comprenant
- un corps d'électrode de soudage (2, 2') et
- une coiffe d'électrode de soudage (18, 18', 18") connectée ou pouvant être connectée au corps d'électrode de soudage (2, 2') pour le contact de l'électrode de soudage (1, 1', 26a) avec un composant (22) pour établir une connexion soudée,
**caractérisée en ce que**
un élément à résistance électriquement conducteur (8) intégré ou pouvant être intégré dans l'électrode de soudage (1, 1', 26a), qui est connecté ou peut être connecté de manière électriquement conductrice au corps d'électrode de soudage (2, 2') et à la coiffe d'électrode de soudage (18, 18', 18") est prévu pour chauffer le composant (22),
l'électrode de soudage (1, 1', 26a) est réalisée de telle sorte que le corps d'électrode de soudage (2, 2') soit connecté ou puisse être connecté de manière électriquement conductrice par le biais de l'élément à résistance (8) et de la coiffe d'électrode de soudage (18, 18', 18") à une gaine d'électrode de soudage (10) électriquement conductrice, électriquement isolée du corps d'électrode de soudage (2, 2'), entourant au moins en partie le corps d'électrode de soudage (2, 2').

2. Électrode de soudage selon la revendication 1, **caractérisée en ce que** l'élément à résistance (8) est intégré ou peut être intégré dans l'électrode de soudage (1, 1', 26a) dans la région du contact prévu de l'électrode de soudage (1, 1', 26a) avec le composant à souder (22).

3. Électrode de soudage selon l'une quelconque des revendications 1 ou 2, **caractérisée en ce que** l'élément à résistance (8) est intégré ou peut être intégré dans le corps d'électrode de soudage (2, 2').

4. Électrode de soudage selon l'une quelconque des revendications 1 à 3, **caractérisée en ce que** l'élément à résistance (8) est intégré ou peut être intégré dans la coiffe d'électrode de soudage (18, 18', 18").

5. Électrode de soudage selon l'une quelconque des revendications 1 à 4, **caractérisée en ce que** l'électrode de soudage (1, 1', 26a) présente au moins un premier matériau pour la conduction d'un courant de soudage (I_{S}), la résistance électrique spécifique de l'élément à résistance (8) étant supérieure à la résistance électrique spécifique du premier matériau de l'électrode de soudage (1, 1', 26a), pour la conduction du courant de soudage (I_{S}).

6. Électrode de soudage selon la revendication 5, **caractérisée en ce que** le corps d'électrode de soudage (2, 2') et/ou la coiffe d'électrode de soudage (18, 18', 18") se composent au moins en partie du premier matériau pour la conduction du courant de soudage (I_{S}), le premier matériau étant de préférence un métal, en particulier du cuivre ou un alliage de cuivre.

7. Électrode de soudage selon l'une quelconque des revendications 1 à 6, **caractérisée en ce que** la gaine d'électrode de soudage (10) électriquement conductrice se compose au moins en partie d'un métal, en particulier de cuivre ou d'un alliage de cuivre, par exemple de laiton.

8. Électrode de soudage selon la revendication 7, **caractérisée en ce que** l'électrode de soudage présente, entre la gaine d'électrode de soudage (10) électriquement conductrice et le corps d'électrode de soudage (2, 2'), une isolation électrique (12) entourant au moins en partie le corps d'électrode de soudage (2, 2').

9. Électrode de soudage selon l'une quelconque des revendications 1 à 8, **caractérisée en ce que** l'élément à résistance (8) se compose au moins en partie de métal et la résistance électrique spécifique de l'élément à résistance (8) est de préférence supérieure à la résistance électrique spécifique du cuivre.

10. Électrode de soudage selon l'une quelconque des revendications 1 à 9, **caractérisée en ce que** le corps d'électrode de soudage (2, 2') présente des canaux de refroidissement (16) pour le refroidissement de l'électrode de soudage (1, 1', 26a).

11. Procédé de soudage par résistance d'une tôle sandwich avec au moins un composant métallique supplémentaire, la tôle sandwich présentant deux couches de recouvrement métalliques et une couche de matière plastique thermoplastique disposée entre les couches de recouvrement métalliques, dans lequel la région à souder de la tôle sandwich est chauffée de telle sorte que la couche de matière plastique thermoplastique se ramollisse et, par compression des couches de recouvrement, soit repoussée hors de la région de soudage et que les couches de recouvrement soient soudées l'une à l'autre avec le composant supplémentaire par un flux de courant électrique dans un premier circuit de courant par le biais d'une première électrode de soudage disposée du côté de la tôle sandwich et d'une deuxième électrode de soudage disposée du côté du composant métallique supplémentaire, **caractérisé en ce que** la première électrode de soudage est une électrode de soudage selon l'une quelconque des revendications 1 à 10 et la région à souder de la tôle sandwich est chauffée par un flux de courant dans un deuxième circuit de courant qui comprend le corps d'électrode de soudage, l'élément à résistance et la coiffe d'électrode de soudage de la première électrode de soudage.

12. Dispositif de soudage par résistance d'une tôle sandwich (22) qui présente une couche en matière plastique thermoplastique (22c) disposée entre des couches de recouvrement métalliques (22a, 22b), comprenant au moins un composant métallique supplémentaire (24), comprenant
- une première électrode de soudage (1, 1', 26a), pouvant être disposée du côté de la tôle sandwich (22) et une deuxième électrode de soudage (26b) pouvant être disposée du côté du composant métallique supplémentaire (24),
- des moyens (28, 30) pour fournir un premier circuit de courant (32), lesquels conduisent un courant de soudage (I_{S}) au moins par le biais de la première et de la deuxième électrode de soudage (1, 1', 26a, 26b), et
- des moyens (1, 1', 26a) pour repousser la couche de matière plastique (22c) de la tôle sandwich (22) hors de la région à souder de la tôle sandwich (22),
**caractérisé en ce que**
la première électrode de soudage (1, 1', 26a), est une électrode de soudage selon l'une quelconque des revendications 1 à 10 et un deuxième circuit de courant (34) est prévu, le deuxième circuit de courant (34) comprenant le corps d'électrode de soudage (2, 2'), l'élément à résistance (8) et la coiffe d'électrode de soudage (18, 18', 18") de la première électrode de soudage (1, 1', 26a), de telle sorte que la région à souder de la tôle sandwich (22) puisse être chauffée par un flux de courant dans le deuxième circuit de courant (34).

13. Utilisation d'une électrode de soudage selon l'une quelconque des revendications 1 à 10 ou d'un dispositif selon la revendication 12 pour le soudage par résistance, en particulier le soudage par points par résistance, d'une tôle sandwich qui présente une couche de matière plastique thermoplastique disposée entre des couches de recouvrement métalliques, avec au moins un composant métallique supplémentaire.
